# EUROPEAN PATENT SPECIFICATION

(11) **EP 1 037 861 B1**
(45) Date of publication and mention of the grant of the patent: **28.11.2007**
(21) Application number: 98965734.1
(22) Date of filing: 02.12.1998
(51) Int. Cl.: C03C 1/00, C03C 13/06, C03C 13/00, C03C 1/02

(54) **BRIQUETTES FOR MINERAL FIBRE PRODUCTION AND THEIR USE**
BRIKETTEN FÜR MINERALFASERHERSTELLUNGSVERFAHREN
BRIQUETTES POUR LA PRODUCTION DE FIBRES MINERALES ET LEUR UTILISATION

(30) Priority: 02.12.1997 EP 97309674; 02.12.1997 EP 97309675
(43) Date of publication of application: 27.09.2000
(60) Divisional application: 07015654.2
(73) Proprietor: Rockwool International A/S, 2640 Hedehusene (DK)
(72) Inventor: RANLOV, Jens, DK-1573 Kobenhavn (DK); WITTKAMP, Peter, D-45149 Essen (DE); NYKYEL, Guido, D-45964 Gladbeck (DE)
(74) Representative: Samuels, Lucy Alice
(86) International application number: PCT/EP1998/007821
(87) International publication number: WO 1999/028252

(56) References cited:
- EP-A- 0 136 767
- WO-A-89/04813
- WO-A-92/04289
- WO-A-96/14274
- WO-A-96/14454
- WO-A-97/30002
- US-A- 5 198 190

## Description

This invention relates to processes of making high alumina content man-made vitreous fibres (MMVF) from a mineral charge which includes briquettes, and to briquettes for this purpose.

MMVF may be made by forming a mineral melt by melting a mineral charge in a furnace and fiberising the melt, usually by a centrifugal fiberising process.

In many of the furnaces which are used, there is a large pool of melt and the mineral charge is melted into this pool. Examples are tank and electric furnaces. In such furnaces, the physical form (i.e., lump or powder) of the mineral charge is relatively unimportant since the melting is conducted into a large volume of previously melted material.

However, there is another type of furnace which is used for forming the melt for MMVF production, especially of fibres of the types that are referred to as rock (including stone or slag) fibres. This is a shaft furnace in which the furnace contains a self-supporting column of solid coarse mineral material and combustion gases permeate through this column so as to heat it and cause melting. The melt drains to the bottom of the column, where a pool of melt is usually formed, and the melt is removed from the base of the furnace. Since the column has to be both self-supporting and permeable it is necessary that the mineral material should be relatively coarse and should have considerable strength, despite the high temperatures in the column (which may exceed 1000°C).

The mineral material can be formed of coarsely crushed rock and slag provided this will withstand the pressures and temperatures in the self-supporting column in shaft furnace. It is known to convert the finer particulate materials such as sands into bonded briquettes for addition to the furnace. These should have sufficient strength and temperature resistance to withstand the conditions in the self-supporting column in the shaft furnace in order that they melt prior to collapsing.

It is necessary for the total charge in the furnace (i.e., crushed mineral alone or crushed mineral plus briquettes) to provide the composition which is desired for the MMV fibres which are to be made.

There is a particular interest in the manufacture of MMVF insulation containing more than 14%, and often 18 to 30%, alumina, for instance as described in WO96/14274 and WO96/14454. These mention the general concept of use of waste materials as part of the starting material. These include high alumina (20 to 30%) slags such as ladle slag, filter dust and high alumina waste from the production of refractory materials. WO96/14274 describes the production of specified physiologically soluble fibres in various ways, including methods using various furnaces such as electric furnaces and cupola furnaces. The use of aluminium-containing waste materials in general is indeed now known, and in electric furnaces and other furnaces discussed above in which the charged mineral materials are melted directly into a pool of melt the waste material can generally be charged directly into the melt pool in any form, usually as received.

WO97/30002 specifically describes the use of bauxite. In practice bauxite (calcined and/or uncalcined) is the material which has been most widely proposed and used for the manufacture of such fibres.

Unfortunately bauxite is a relatively expensive raw material and the use of bauxite incurs difficulties (additional to its cost) in a shaft furnace containing a self-supporting stack of mineral.

In a shaft furnace bauxite must be charged in a form which can form part of the self-supporting stack. Thus it can be charged as coarse rock.

In shaft furnaces the residence time of material in the small melt pool at the base of the furnace is short, and the raw materials must melt sufficiently rapidly in this pool of melt if a melt is to be obtained which is suitable for provision of final product having good properties.

Bauxite requires a high energy input for melting, in particular if provided in the form of coarse rock. Bauxite can also be provided as part of the briquette component, which requires major energy expenditure to crush and grind the bauxite into a suitable form. However, even when ground into fine particles and incorporated into briquettes, bauxite gives melting problems due to its high melting point. In fact, a proportion of the bauxite does not melt at all but is instead dissolved in the pool of melt at the base of the furnace. To maximise melting of the bauxite in the time available requires provision of fuel, in particular solid fossil fuel such as coke. This increases costs and improves melting, but even then inevitably a small proportion of the bauxite is not melted completely. The unmelted bauxite accumulates in the bottom of the furnace. This means that the melt exiting the furnace does not have exactly the same composition as the charge of raw mineral materials. Furthermore, the accumulated bauxite reduces the volume of the melt pool and the residence time in that pool is thus reduced further. Consequently the accumulated unmelted bauxite must be removed from the furnace from time to time. In the production of high alumina fibres using a shaft furnace, it is frequently necessary to provide a large proportion of the charge as briquettes. It would be desirable to be able to provide briquettes which have good resistance to the high temperatures and pressures in the shaft furnace and thus can form a strong self-supporting stack but also melt sufficiently rapidly and uniformly that they release their constituents evenly into the melt. In particular it would be desirable to provide briquettes which have improved properties in comparison with briquettes containing ground bauxite.

US 5,198,190 discloses a process of recycling industrial waste in which mineral wool is produced. This process is not directed to the problem of producing fibres of high alumina content. WO92/04289 discloses briquettes for mineral wool production which comprise a binder of alkali activated slag, but briquettes having high content of alumina are not disclosed. EP-A-136,767 describes production of a different type of fibres, namely ceramic fibres. Processes involving briquettes or shaft furnaces are not discussed.

US 5,045,506 generally discloses that alumina-containing residues from metal melting operations can be used in the production of mineral fibres. The exemplified residue does not appear to contain metallic aluminium. Use in briquettes is not disclosed. US 5,424,260 also discloses that oxide products and non-metallic products recovered from aluminium dross (which results from the melting of aluminium scrap and treating the melt with salt flux) can be processed to form ceramic products. These products can be fibres. Briquettes are not discussed.

Thus the invention is concerned with the specific problems which arise with the use of bauxite and most alumina-containing waste materials in briquettes in shaft furnaces. We have found that processes for the provision of high alumina fibres from briquettes, preferably physiologically soluble fibres, in a shaft furnace can be improved by the selection of specific raw materials having defined content of alumina and metallic aluminium.

The invention provides novel briquettes suitable for use in the manufacture of high aluminium MMVF (e.g. MMVF containing at least 14% aluminium) which contain at least 5% (by weight of the briquette) particulate alumina-containing mineral containing 0.5 to 10 wt.% metallic aluminium, 50 to 90 wt.% alumina Al₂O₃ and 0 to 49.5 wt.% other materials.

The invention also encompasses the process of using these novel briquettes for the manufacture of MMVF.

In particularly preferred aspects of the invention the particulate alumina-containing mineral has a controlled particle size distribution. In particular the particulate alumina-containing mineral has size 90% by weight below 1mm, preferably 90% by weight below 200 microns. Preferably the average particle size is from 10 to 100 microns, for instance 20 to 30 microns.

We find that the choice of the defined specific particulate alumina-containing minerals, out of all the general ranges of virgin and waste aluminium-containing materials which are known, gives particular benefits in processes where briquettes are melted in a shaft furnace. The presence of the defined proportion of metallic aluminium gives benefits in the melting process, since it is oxidised exothermically in the shaft furnace. This contributes energy towards melting of the other components, such as alumina Al₂O₃, and can reduce the fuel requirements. The defined maximum proportion of alumina Al₂O₃ in the mineral lowers the melting point of the mineral in comparison with bauxite and very high Al₂O₃ wastes such as filter dust and thus melts more easily and more completely in the residence time available. The preferred small particle size materials also contribute further to the melting benefits.

We also find that the use of the specified high aluminium, alumina-containing mineral, especially when provided in a form which has the preferred particle size distribution defined above, gives improved strength to the briquettes.

The high aluminium mineral must contain from 0.5 to 10 wt.% metallic aluminium. Preferably it contains from 2 to 6 wt.%, more preferably below 5 wt.%, metallic aluminium.

The high aluminium mineral contains from 50 to 90 wt.% alumina Al₂O₃, preferably below 85 wt.%, more preferably from 60 to 72 wt.%.

Contents of metallic aluminium and alumina (and other components) are on a dry basis and can be determined using standard methods. For instance, content of metallic aluminium can be determined by reacting the material with a strong acid, such as hydrochloric acid. The amount of metallic aluminium can be determined from the amount of hydrogen gas released.

The alumina-containing mineral contains 0 to 49.5 wt.% other materials, generally at least 5 wt.%. Correct choice of these other materials can increase the usefulness of the high aluminium material in the briquettes. In particular, certain other materials can act as fluxing agents which improve the melting ability of the material in the briquettes. In particular it is preferred that the other materials include at least 5 wt.% SiO₂ and MgO. For instance, the total amount of these oxides is generally from 3 to 35%, preferably 10 to 25%. Preferred amounts of SiO₂ are 3 to 20%, more preferably 6 to 15%. Preferred amounts of MgO are 3 to 15%, more preferably 5 to 10%.

Preferably the alumina-containing mineral contains Fe₂O₃ in an amount of from 0.5 to 10 wt.%, more preferably 1 to 6 wt.%.

In particular it is preferred that the alumina-containing mineral material contains oxides of corundum, spinel and mullite. Preferably the crystals of these oxides in the mineral meet the particle size ranges discussed above.

Any alumina-containing mineral material which meets the requirements set out above may be used. Preferably it is a waste material. In particular, wastes from secondary production of aluminium, e.g. processes of casting aluminium, are useful. These are often described generically as "aluminium dross" or "aluminium oxide dross". In particular, the aluminium casting process provides a specific alumina-rich waste material described commonly as "alu-dross". This tends to contain significant proportions of metallic aluminium and is thus treated in order to retrieve the metallic aluminium. The alu-dross is generally crushed, milled and sieved. This produces some aluminium for re-sale and an aluminium-rich fraction which is sent to a furnace for re-use. As a by-product an alumina-rich powder is also produced. This powder can usefully be incorporated into briquettes for use in the invention and is described herein as "crushed alu-dross". This alumina-rich powder generated from treatment of alu-dross (crushed alu-dross) may contain levels of halogen materials (by weight) of for instance 1 to 10%, preferably 1 to 8%. Halogens include in particular fluoride and chloride.

The aluminium-rich fraction, optionally together with other aluminium-containing waste materials, is subjected to re-melting in a furnace. This may be a rotating furnace or kiln. The aluminium waste may be subjected to plasma heating. A conventional furnace may be used. Salt is usually added to the furnace in order to reduce the surface tension of the aluminium and reduce oxidation. This process produces an aluminium fraction for resale, more alu-dross and a salt slag material. The salt slag can be subjected to a wet chemical process (involving water washing and high temperature treatment) which produces a salt fraction, which is recycled to the furnace, and a further alumina-rich powder. This second alumina-rich powder can also be usefully incorporated in briquettes in the invention and is described herein as "treated aluminium salt slag". This product tends to have lower content of halogen materials (e.g. fluoride) than the alumina-rich powder produced by treatment of alu-dross (crushed alu-dross). Its content of halogen (by weight) tends to be from 0 to 5%, often at least 0.5 or 1%, and is preferably not more than 3%.

The particular alumina-rich powder which is chosen will depend upon the requirements of the process. Halogen-containing alumina-rich powders can be advantageous, as discussed in our publication number WO99/28253. Powders containing 1 to 3% halogen, e.g. treated aluminium salt slag, are preferred in the invention.

Both crushed alu-dross and treated aluminium salt slag have the advantage that as received they have particle size in or close to the preferred ranges discussed above. Thus they may be used for incorporation into briquettes without further size reduction or, if the distribution is not exactly as discussed above, after selection of appropriate fractions. Thus they have the further advantage over bauxite that extensive grinding and crushing are not required.

Some of the alumina-rich powders are used in the cement industry and are sold under the tradenames Oxiton, Valoxy and Oxidur. These may be used in the invention. However, large proportions of the alumina-rich powder are presently sent to landfill and an advantage of the invention is that it provides further uses for these materials (as well as the technical benefits obtained by using them).

The fibres produced in the invention have high minium content (measured by weight of Al₂O₃), namely at least 14%, preferably at least 15%, more preferably at least 16% and in particular at least 18%. Generally the amount of aluminium is not more than 35%, preferably not more than 30%, more preferably not more than 26 or 23%.

In general the fibres and the melt from which they are formed have an analysis (measured as % by weight of oxides) of other elements within the various ranges defined by the following normal and preferred lower and upper limits :
Sio₂: at least 30, 32, 35 or 37; not more than 51, 48, 45 or 43
CaO: at least 8 or 10; not more than 30, 25 or 20
MgO: at least 2 or 5; not more than 25, 20 or 15
FeO (including Fe₂O₃): at least 2 or 5; not more than 15, 12 or 10
FeO+MgO: at least 10, 12 or 15; not more than 30, 25 or 20
Na₂O+K₂O: zero or at least 1; not more than 10
CaO+Na₂O+K₂O: at least 10 or 15; not more than 30 or 25
TiO₂: zero or at least 1; not more than 6, 4 or 2
TiO₂+FeO: at least 4 or 6; not more than 18 or 12
B₂O₃: zero or at least 1; not more than 5 or 3
P₂O₅: zero or at least 1; not more than 8 or 5
Others: zero or at least 1; not more than 8 or 5

In the invention it is preferred that the amount of iron in the fibres is from 2 to 15%, preferably 5 to 12%. Shaft furnaces such as cupola furnaces tend to have a reducing atmosphere, which can result in reduction of iron oxides and formation of metallic iron. This is not incorporated into the melt and fibres and must be removed from the furnace. Thus the conditions in the furnace must be carefully controlled to avoid excess reduction of iron. It is surprising that the inclusion of metallic aluminium is advantageous in such processes, since it is oxidised in the furnace and might be expected to increase reduction of iron. However, we find that it is possible in the invention to produce final product fibres having significant levels of iron oxide.

The invention is of particular value in the production of fibres which can be shown to be soluble in physiological saline. Suitable high aluminium, biologically soluble, fibres which can advantageously be made in the present invention are described in WO96/14454 and WO96/14274. Others are described in WO97/29057, DE-U-2970027 and WO97/30002. Reference should be made to each of these.

The fibres preferably have an adequate solubility in lung fluids as shown in vivo tests or in vitro tests, typically conducted in physiological saline buffered to about pH 4.5. Suitable solubilities are described in WO96/14454. Usually the rate of dissolution is at least 10 or 20nm per day in that saline.

The fibres preferably have sintering temperature above 800°C, more preferably above 1000°C.

The melt preferably has a viscosity at fibre forming temperature of 5 to 100 poise, preferably 10 to 70 poise at 1400°C.

It is preferred in the invention that the furnace is a shaft furnace in which a self-supporting stack of mineral material is heated and melt drains to the base of the stack. Usually it forms a pool from which it is run off to the fibre forming process. In some cases the melt can be run from the base of the stack into another chamber where it collects as a pool and from which it is run off to the fibre-forming process. The preferred type of shaft furnace is a cupola.

It is also essential in the invention that the charge includes briquettes. The briquettes are made in known manner by molding a mix of the desired particulate materials (including the high aluminium material) and a binder into the desired briquette shape and curing the binder.

The binder may be a hydraulic binder, that is one which is activated by water, for instance Portland cement. Other hydraulic binders can be used as partial or complete replacement for the cement and examples include lime, blast furnace slag powder (JP-A-51075711) and certain other slags and even cement kiln dust and ground MMVF shot (US 4662941 and US 4724295).

Alternative binders include clay. The briquettes may also be formed with an organic binder such as molasses, for instance as described in WO95/34514; such briquettes are described herein as formstones.

At least one quarter of the aluminium in the fibres is preferably provided by the defined high-aluminium mineral incorporated into the briquettes. Preferably at least 50%, more preferably at least 75% and most preferably substantially all of the aluminium in the fibres is provided by the defined high-aluminium material.

Generally at least 20 to 25%, preferably at least 30% of the charge (by weight) is provided by briquettes. In some processes higher amounts, e.g. 45 to 55%, are' preferred and amounts above 75% or even above 80% are sometimes preferred. The invention is especially beneficial in processes where a significant (e.g. above 25%) proportion of the charge is in the form of briquettes.

The briquettes contain (by weight) at least 5% of the defined aluminium-containing mineral, preferably at least 10 or 15%. They may contain more than 20% but generally do not contain more than 45 or 50% of the defined aluminium-containing material.

The other materials in the briquettes and in the rest of the charge may be any suitable virgin or waste materials. Other suitable wastes that can be used in the invention include slags from the metallurgical industry, especially steelmaking slags such as converter slags or EAF slags, and slags from the ferro-alloy industry such as ferro-chromium, ferro-manganese or ferro-silica slags; slags and residues from the primary production of aluminium such as spent aluminium pot lining or red mud; dried or wet sludge from the paper industry; sewage sludge; melasse; bleaching clay; residues from the incineration of household and industrial wastes, especially slags or filter ashes from the incineration of municipal solid wastes; glass waste (or slags) from the vitrification of other waste products; glass cutlets; waste products from the mining industry, especially minestone from the excavation of coal; residues from the incineration of fossil fuel, especially from the combustion of coke at power plants; spent abrasive sand; spent moulding sand from iron and steel casing; waste sieving sand; glass reinforced plastic; and fines and breakage waste from the ceramic and brick industry. Toxic virgin rock can also be used as waste.

Because the invention may advantageously use waste materials, which may be of variable content, it can be desirable to monitor the melt or the fibre properties and to change the process conditions as necessary in order to maintain uniform production. Preferably this is done as described in our publication number WO99/28251.

The MMV fibres may be made from the fibre-forming mineral melt in conventional manner. Generally they are made by a centrifugal fibre-forming process. For instance the fibres may be formed by a spinning cup process in which they are thrown outwardly through perforations in a spinning cup, or melt may be thrown off a rotating disc and fibre formation may be promoted by blasting jets of gas through the melt. Preferably fibre formation is conducted by pouring the melt onto the first rotor in a cascade spinner. Preferably the melt is poured onto the first of a set of two, three or four rotors, each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The following are Examples, Each of these describes a charge for a cupola furnace and the analysis of the subsequent melt which can be fiberised, for instance using a cascade spinner.

### Example 1

### Cement briquettes with treated aluminium salt slag

### Composition of treated aluminium salt slag

| SiO₂ (w/w%) | Al₂O₃ (w/w%) | TiO₂ (w/w%) | FeO (w/w%) | CaO (w/w%) | MgO (w/w%) | Na₂O (w/w%) | K₂O (w/w%) | F (w/w%) | Ignition Loss (w/w%) |
|---|---|---|---|---|---|---|---|---|---|
| 7.0 | 65.3 | 0.3 | 1.4 | 3.0 | 8.6 | 1.0 | 0.4 | 2.2 | 9 |

### Cement Briquettes

Treated aluminium salt slag: 16.5%, Cement: 14.5%, Process waste wool: 37%, Process waste slag: 21%, Ladle slag: 4.5%, bottom slag: 3.5%, Bauxite: 3%

These cement briquettes had the advantage over "normal" cement briquettes in their higher resistance to the mechanical stress from transportation and logistics with reduced loss to fines and improved stability in the furnace.

### Charge to Furnace

Cement Briquette: 50%, basalt: 50%

### Melt composition from furnace

| SiO₂ (w/w%) | Al₂O₃ (w/w%) | TiO₂ (w/w%) | FeO (w/w%) | CaO (w/w%) | MgO (w/w%) | Na₂O (w/w%) | K₂O (w/w%) | MnO (w/w%) | Poise |
|---|---|---|---|---|---|---|---|---|---|
| 40.2 | 20.6 | 2.1 | 5.4 | 17.9 | 10.0 | 1.3 | 1.4 | 0.3 | 20.2 |

### Example 2

### Clay briquettes with treated aluminium salt slag

### Clay briquettes

Treated aluminium salt slag: 8%, Clay: 50%, Olivine sand: 4%, Iron ore: 2%, process waste wool: 32%, Other process waste: 4%

### Cement briquettes

Treated aluminium salt slag: 40%, Ladle slag: 51%, Cement: 9%

### Charge to Furnace

Clay briquettes: 86%, Cement briquettes: 6%, Converter slag: 6%, Lump process slag: 2%
The total content of treated aluminium salt slag in the charge is 9.3%.

### Melt composition from furnace

| SiO₂ (w/w%) | Al₂O₃ (w/w%) | TiO₂ (w/w%) | FeO (w/w%) | CaO (w/w%) | MgO (w/w%) | Na₂O (w/w%) | K₂O (w/w%) | MnO (w/w%) | Poise |
|---|---|---|---|---|---|---|---|---|---|
| 42.9 | 18.8 | 0.8 | 6.3 | 20.5 | 6.6 | 0.6 | 1.7 | 0.5 | 26.1 |

Compared to normal conditions the coke consumption was reduced by 1.5% (from 13.2 to 11.7% when the clay briquettes with treated aluminium salt slag were used. This was accompanied by an increased melt temperature (from 1495-1510°C to 1526-1530°C).

### Example 3

### Formstones with treated aluminium salt slag

### Formstones

Treated aluminium salt slag: 19%, Lime: 3%, Molasses: 9%, process waste: 64%, Iron ore: 5%

### Charge to furnace

Formstones: 31%, Diabase: 47%, Blast furnace slag: 16%, Dolomite: 6%

### Melt composition from furnace

| SiO₂ (w/w%) | Al₂O₃ (w/w%) | TiO₂ (w/w%) | FeO (w/w%) | CaO (w/w%) | MgO (w/w%) | Na₂O (w/w%) | K₂O (w/w%) | MnO (w/w%) | Poise |
|---|---|---|---|---|---|---|---|---|---|
| 40.1 | 20.3 | 1.8 | 6.2 | 18.4 | 7.9 | 3.0 | 1.1 | 0.2 | 24.6 |

Replacing the bauxite lumps normally used with 20% of the formstones saved 1% (from 12.8 to 11.8%) coke.

## Claims

1. A process of producing man-made vitreous fibres comprising providing a mineral charge which includes briquettes, melting the charge to provide a melt, and
fiberising the melt, **characterised in that** the briquettes comprise at least 5%, by weight of the briquette, of a particulate alumina-containing mineral containing 0.5 to 10 wt.% metallic aluminium, 50 to 90 wt.% alumina Al₂O₃ and 0 to 49.5 wt.% other materials.

2. A process according to claim 1, in which the fibres have a composition which contains at least 14% aluminium measured as weight Al₂O₃ based on oxides.

3. A process according to claim 1 or claim 2 in which the mineral charge is provided as a self-supporting stack in a shaft furnace and is melted to provide a melt at the base of the furnace.

4. A process according to preceding claim in which the briquettes contain at least 10%, by weight of the briquette, of the particulate alumina-containing mineral.

5. A process according to any preceding claim in which the particulate alumina-containing mineral has size 90% by weight below 200 microns.

6. A process according to any preceding claim in which the alumina-containing mineral has a content of metallic aluminium from 2 to 6 wt.%.

7. A process according to any preceding claim in which the alumina-containing mineral has a content of alumina Al₂O₃ from 60 to 72 wt.%.

8. A process according to any preceding claim in which the alumina-containing mineral contains from 3 to 20 wt.% SiO₂ and from 3 to 15 wt.% MgO.

9. A process according to any preceding claim in which the alumina-containing material is crushed alu-dross.

10. A process according to any of claims 1 to 8 in which the alumina-containing mineral is treated aluminium salt slag.

11. A process according to claim 10 in which the treated aluminium salt slag has a content of halogen, preferably fluorine, of from 1 to 4% by weight.

12. A process according to any preceding claim in which the particulate alumina-containing mineral has a content of Fe₂O₃ in an amount of from 0.5 to 10 weight %, preferably 1 to 6 weight %.

13. A process according to any preceding claim in which the fibres have aluminium content measured by weight of Al₂O₃ from 18 to 30%.

14. A process according to any preceding claim in which the fibres have iron content measured by weight of FeO of from 5 to 12%.

15. A process according to any preceding claim in which the furnace is a cupola furnace.

16. A process according to any preceding claim in which at least 25% of the mineral charge is formed by briquettes.

17. A process according to any preceding claim in which at least one quarter of the aluminium in the charge is introduced as the particulate alumina-containing mineral in the briquettes.

18. A briquette suitable for the production of man-made vitreous fibres containing at least 5%, by weight of the briquette, of a particulate alumina-containing mineral containing 0.5 to 10 wt.% metallic aluminium, 50 to 90 wt.% alumina Al₂O₃ and 0 to 49.5 wt.% other materials.

19. A briquette according to claim 18 which contains at least 10%, by weight of the briquette, of the particulate alumina-containing mineral.

20. A briquette according to claim 18 or claim 19 having any of the additional features set out in claims 5 to 12.

21. Use of a briquette according to any of claims 18 to 20 for improving the melting properties of a mineral charge in which it is included.

## Patentansprüche

1. Verfahren zur Herstellung von künstlichen glasartigen Fasern, umfassend das Bereitstellen einer mineralischen Charge, die Briketts beinhaltet, das Schmelzen der Charge, um eine Schmelze bereitzustellen, und das Zerfasern der Schmelze, **dadurch gekennzeichnet, dass** die Briketts mindestens 5%, bezogen auf das Gewicht des Briketts, eines teilchenförmigen Aluminiumoxid enthaltenden Minerals enthaltend 0,5 bis 10 Gew.-% metallisches Aluminium, 50 bis 90 Gew.-% Aluminiumoxid Al₂O₃ und 0 bis 49,5 Gew.-% andere Materialien umfassen.

2. Verfahren nach Anspruch 1, bei dem die Fasern eine Zusammensetzung aufweisen, die mindestens 14% Aluminium, gemessen als Gewicht Al₂O₃ auf Basis der Oxide, enthält.

3. Verfahren nach Anspruch 1 oder Anspruch 2, bei dem die mineralische Charge als ein selbsttragender Stapel in einem Schachtofen bereitgestellt wird und geschmolzen wird, um eine Schmelze am Boden des Ofens bereitzustellen.

4. Verfahren nach irgendeinem vorhergehenden Anspruch, bei dem die Briketts mindestens 10%, bezogen auf das Gewicht des Briketts, des teilchenförmigen Aluminiumoxid enthaltenden Minerals enthalten.

5. Verfahren nach irgendeinem vorhergehenden Anspruch, bei dem das teilchenförmige Aluminiumoxid enthaltende Mineral zu 90 Gew.-% eine Größe von unter 200 Mikron aufweist.

6. Verfahren nach irgendeinem vorhergehenden Anspruch, bei dem das Aluminiumoxid enthaltende Mineral einen Gehalt an metallischem Aluminium von 2 bis 6 Gew.-% aufweist.

7. Verfahren nach irgendeinem vorhergehenden Anspruch, bei dem das Aluminiumoxid enthaltende Mineral einen Gehalt an Aluminiumoxid Al₂O₃ von 60 bis 72 Gew.-% aufweist.

8. Verfahren nach irgendeinem vorhergehenden Anspruch, bei dem das Aluminiumoxid enthaltende Mineral 3 bis 20 Gew.-% SiO₂ und 3 bis 15 Gew.-% MgO enthält.

9. Verfahren nach irgendeinem vorhergehenden Anspruch, bei dem das Aluminiumoxid enthaltende Material zerkleinerte Alukrätze ist.

10. Verfahren nach irgendeinem der Ansprüche 1 bis 8, bei dem das Aluminiumoxid enthaltende Mineral behandelte Aluminiumsalzschlacke ist.

11. Verfahren nach Anspruch 10, bei dem die behandelte Aluminiumsalzschlacke einen Gehalt an Halogen, bevorzugt Fluor, von 1 bis 4 Gew.-% aufweist.

12. Verfahren nach irgendeinem vorhergehenden Anspruch, bei dem das teilchenförmige Aluminiumoxid enthaltende Mineral einen Gehalt an Fe₂O₃ in einer Menge von 0,5 bis 10 Gew.-%, bevorzugt 1 bis 6 Gew.-%, aufweist.

13. Verfahren nach irgendeinem vorhergehenden Anspruch, bei dem die Fasern einen Aluminiumgehalt, gemessen als Gewicht von Al₂O₃, von 18 bis 30% aufweisen.

14. Verfahren nach irgendeinem vorhergehenden Anspruch, bei dem die Fasern einen Eisengehalt, gemessen als Gewicht von FeO, von 5 bis 12% aufweisen.

15. Verfahren nach irgendeinem vorhergehenden Anspruch, bei dem der Ofen ein Kupol-Ofen ist.

16. Verfahren nach irgendeinem vorhergehenden Anspruch, bei dem mindestens 25% der mineralischen Charge durch Briketts gebildet sind.

17. Verfahren nach irgendeinem vorhergehenden Anspruch, bei dem mindestens ein Viertel des Aluminiums in der Charge als teilchenförmiges Aluminiumoxid enthaltendes Mineral in die Briketts eingebracht wird.

18. Brikett, das sich zur Herstellung von künstlichen glasartigen Fasern eignet, enthaltend mindestens 5%, bezogen auf das Gewicht des Briketts, eines teilchenförmigen Aluminiumoxid enthaltenden Minerals enthaltend 0,5 bis 10 Gew.-% metallisches Aluminium, 50 bis 90 Gew.-% Aluminiumoxid Al₂O₃ und 0 bis 49,5 Gew.-% andere Materialien.

19. Brikett nach Anspruch 18, welches mindestens 10%, bezogen auf das Gewicht des Briketts, des teilchenförmigen Aluminiumoxid enthaltenden Minerals enthält.

20. Brikett nach Anspruch 18 oder Anspruch 19 mit irgendeinem der zusätzlichen Merkmale, die in den Ansprüchen 5 bis 12 dargelegt sind.

21. Verwendung eines Briketts nach irgendeinem der Ansprüche 18 bis 20 zur Verbesserung der Schmelzeigenschaften einer mineralischen Charge, in der es aufgenommen ist.

## Revendications

1. Procédé de production de fibres vitreuses artificielles comprenant la fourniture d'une charge minérale qui inclut des briquettes, la fusion de la charge pour produire une masse fondue, et la transformation de la masse fondue en fibres, **caractérisé en ce que** les briquettes comprennent au moins 5 %, en masse de la briquette, d'un minéral particulaire contenant de l'alumine contenant 0,5 à 10 % en masse d'aluminium métallique, 50 à 90 % en masse d'alumine Al₂O₃ et 0 à 49,5 % en masse d'autres matériaux.

2. Procédé selon la revendication 1 où les fibres ont une composition qui contient au moins 14 % d'aluminium mesurés en masse de Al₂O₃ basée sur les oxydes.

3. Procédé selon la revendication 1 ou la revendication 2 où la charge minérale est fournie sous forme d'un tas autoporteur dans un four à cuve et est fondue pour produire une masse fondue à la base du four.

4. Procédé selon la revendication précédente où les briquettes contiennent au moins 10 %, en masse de la briquette, du minéral particulaire contenant de l'alumine.

5. Procédé selon l'une quelconque des revendications précédentes où le minéral particulaire contenant de l'alumine a une taille de 90 % en masse inférieure à 200 µm.

6. Procédé selon l'une quelconque des revendications précédentes où le minéral contenant de l'alumine a une teneur en aluminium métallique de 2 à 6 % en masse.

7. Procédé selon l'une quelconque des revendications précédentes où le minéral contenant de l'alumine a une teneur en alumine Al₂O₃ de 60 à 72 % en masse.

8. Procédé selon l'une quelconque des revendications précédentes où le minéral contenant de l'alumine contient de 3 à 20 % en masse de SiO₂ et de 3 à 15 % en masse de MgO.

9. Procédé selon l'une quelconque des revendications précédentes où le matériau contenant de l'alumine est un déchet de alu broyé.

10. Procédé selon l'une quelconque des revendications 1 à 8 où le minéral contenant de l'alumine est une scorie de sel d'aluminium traitée.

11. Procédé selon la revendication 10 où la scorie de sel d'aluminium traitée a une teneur en halogène, de préférence en fluor, de 1 à 4 % en masse.

12. Procédé selon l'une quelconque des revendications précédentes où le minéral particulaire contenant de l'alumine a une teneur en Fe₂O₃ en une quantité de 0,5 à 10 % en masse, de préférence de 1 à 6 % en masse.

13. Procédé selon l'une quelconque des revendications précédentes où les fibres ont une teneur en aluminium mesurée en masse de Al₂O₃ de 18 à 30 %.

14. Procédé selon l'une quelconque des revendications précédentes où les fibres ont une teneur en fer mesurée en masse de FeO de 5 à 12 %.

15. Procédé selon l'une quelconque des revendications précédentes où le four est un cubilot.

16. Procédé selon l'une quelconque des revendications précédentes où au moins 25 % de la charge minérale est formée par des briquettes.

17. Procédé selon l'une quelconque des revendications précédentes où au moins un quart de l'aluminium dans la charge est introduit sous forme du minéral particulaire contenant de l'alumine dans les briquettes.

18. Briquette appropriée pour la production de fibres vitreuses artificielles contenant au moins 5 %, en masse de la briquette, d'un minéral contenant de l'alumine particulaire contenant 0,5 à 10 % en masse d'aluminium métallique, 50 à 90 % en masse d'alumine Al₂O₃ et 0 à 49,5 % en masse d'autres matériaux.

19. Briquette selon la revendication 18 qui contient au moins 10 %, en masse de la briquette, du minéral particulaire contenant de l'alumine.

20. Briquette selon la revendication 18 ou la revendication 19 ayant l'une quelconque des caractéristiques supplémentaires présentées dans les revendications 5 à 12.

21. Utilisation d'une briquette selon l'une quelconque des revendications 18 à 20 pour améliorer les propriétés de fusion d'une charge minérale dans laquelle elle est incluse.
